# EUROPEAN PATENT APPLICATION

(11) **EP 1 619 618 A1**
(43) Date of publication of application: **25.01.2006**
(21) Application number: 05076659.1
(22) Date of filing: 19.07.2005
(51) Int. Cl.: G06Q 10/00

(54) **Method, computer system and computer program product for running a business application**

(30) Priority: 19.07.2004 EP 04016962
(71) Applicant: SAP AG, 69190 Walldorf (DE)
(72) Inventor: Beringer, Joerg, 60431 Frankfurt (DE); Moore, Dennis, Burlingame, California 94010 (US)
(74) Representative: Winckels, Johannes Hubertus F.

(57) **Abstract**

A computer system, including a user-interface and a processor communicatively connected to the user-interface, which processor is arranged to perform instructions in accordance with a business application stored in a memory connected to the processor. The business application includes context code portions representing at least one context, which context represents a business situation. Further provided are service interface code portions defining at least one interface between a service and the computer system, for transferring data from a parameter of the context to an service associated with the context or vice versa. The business application further has user-interface code portions for outputting at the user-interface data representing information about at least one of the contexts.

## Description

### FIELD AND BACKGROUND OF THE INVENTION

The invention relates to a computer system, a method for running a business application and a computer program product.

Business applications running on programmable devices, such as computers and personal digital assistants or otherwise, are known. In the following, such programmable devices are generally referred to as computer systems. These prior art business applications aid users of the applications performing their activities within an enterprise. For example, a business application may guide a user through steps of a certain business process in a certain order, e.g. hiring a new employee. It is known to implement a business application using a multiple of services. For different steps in this process the business application may then provide the user with one or more services at the user interface, such as filling in and submitting a form to a database (e.g. with the new employees name address etc), and ordering items (e.g. a workplace for the new employee etc).

Typically, a service is implemented as a set of procedures or functions hosted on a computer server connected to the computer devices. A computer device on which the business application is running can request data from the computer server, by submitting a set of parameters to the set of procedures or functions on the server. It is known to implement services as Web services which allow a user of a web browser to request XML data from the server by submitting parameters to the server. Web services (sometimes called application services) are services (usually including some combination of programming and data, but possibly including human resources as well) that are made available from a business's Web server for Web users or other Web-connected programs. Web services range from major services like storage management and customer relationship management (CRM) down to much more limited services such as the furnishing of a stock quote and the checking of bids for an auction item.

However, a disadvantage of the known business applications is that they have a low ease of use. The different services each have a specific interface to a user via which different data is provided data to a user. Hence, it is difficult for a user of the known business applications to gather from the data provided by the respective services, the information related to a certain task, activity, or other business situation role within an enterprise.

### SUMMARY OF THE INVENTION

It is a goal of the invention to provide a computer system which is has an improved ease of use. Therefore, a computer system according to claim 1 is provided.

In a computer system according to the invention, when the business application is running, the processor can output at the user-interface data representing information about at least one of said contexts, and hence about the business situation represented by the context. Therefore, a user does not have to collect the information about the business situation from a plurality of service-to-user interfaces. Accordingly, the user can comprehend the information about a business situation more easily. Hence, a computer system according to the invention has an improved ease of use.

In addition, the context thus orchestrates the communication between different services and the user interface. Accordingly, the need to provide the computer system with a plurality of service-to-user interfaces is obviated and the computer system can be of a less complex design.

The invention further provides a method according to claim 11. Furthermore, a computer program product according to claim 12 is provided. The invention further provides an article of manufacture according to claim 13. Also, a computer network according to claim 14 is provided.

Specific embodiments of the invention are set forth in the dependent claims.

### BRIEF DESCRIPTION OF THE DRAWINGS

Further details, aspects and embodiments of the invention will be described, by way of example only, with reference to the attached drawings.
Fig. 1 schematically shows a block diagram of a computer system suitable for implementing a business application.
Fig. 2 schematically shows an example of a User Interface suitable for in the example of fig. 1.
Fig. 3 schematically shows the example of fig. 2 in a service invoked state.
Fig. 4 schematically shows a block diagram of a computer network provided with a business application according to the invention.

### DETAILED DESCRIPTION OF EMBODIMENTS

Business users are engaged in many activities they need to oversee and monitor. In traditional design of transactional ERP systems it is very cumbersome for the users to pull together all information needed to understand a business problem or the state of a coherent activity because the information is embedded in different applications. The invention introduces an Activity Browser that lists all ongoing work contexts of an user and provides contextual views on each of the work contexts. It operates on a common work context layer that instantiated stateful context templates. Each context supports generic views on work context like resources, participants, pending actions, related actions, achievements, exceptions, worklists, etc.. The Activity Browser enables the business user to browse through ongoing activities of different flavors like projects, teams, roles, procedures, problem resolutions, etc. by operating on a common context layer that drives the different contextual views for each of the contexts. The exact list of available contextual views is determined by the common context model, the context class, and the particular context template.

The Activity Browser Design unifies entities that have been treated very differently and inconsistently in the past, e.g. teamrooms, role overview pages, WorkCenters, Guided Procedure Instance. This unification is done by abstracting each of these entities and look at them as a work instance that has a specific context. Role-based activity spaces are included as well and harmonized with ad-hoc Activity Spaces. This solves the problem of the portal of integrating organizational roles with dynamic ad-hoc work contexts like instances of teamrooms.

The Activity Browser creates a new user experience by enabling users to browse their personal ongoing activities and inspect them from different perspectives without leaving the Control Center.

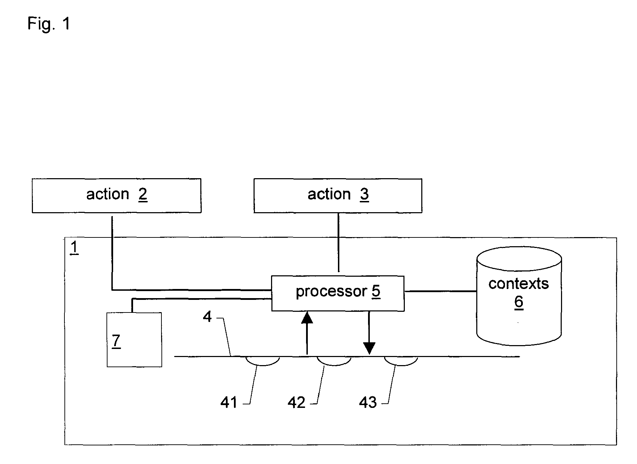

In fig, 1, an example of an embodiment of a computer system according to the invention is shown The computer system 1 is connected to server systems 2,3 which provide a service to the computer system 1. The example of a computer system 1 shown in fig. 1 includes a user-interface 4, a processor 5, a context repository 6 and a memory 7. The processor 5 is connected to the user-interface 4, the context repository 6 and the memory 7.

In the memory 7, data representing a business application are stored. In this example, in operation, the processor 5 performs instructions in accordance with the program code of the business application. In the following, the operations performed by the processor 5 in accordance with the program code of the business application are referred to as being performed by the business application.

In the context repository 6, contexts are stored. Each of the contexts contains a representation of a business situation. In this example, the contexts are objects which have the structure and parameters defined by a context template. A context template provides meta-data about a context and represents a meta-model of a business situation. The context template defines the structure of the context, possible parameters, how the context and services interact in terms of parameters passing, etc.. The meta-model may define parameters related to a specific work context, such as artefacts used in the work context, actions which can be performed and people involved in the work context or any other suitable parameter.

The context further represents a model of a business situation which conforms to the meta-model represented by the context template. In this example, to the parameters of the object, i.e. the model, values are assigned which represent aspects of a real life business situation of the type modelled by the context. For example, a context may model a supplier review procedure and to that model values are assigned of e.g. an actual supplier of an enterprise.

When running, the business application may use data from one or more of the contexts to assist a user of the business application in operating within an enterprise. For example, the business application may output data representing information about the context at the user-interface 4, and contain user-interface code portions which perform these tasks. For instance, from the context data may be selected depending on a certain selection criterion and outputted at the user-interface 4. Also one or more contexts may be selected depending on a selection criterion, and at the user interface data from the selected contexts may be outputted

For example, a context may be selected, or data may be selected, depending on the role of a user in an enterprise. For example, the contexts which contain parameter having a value corresponding to the role of the user may be selected. Information about the selected contexts may then be outputted at the user-interface 4 For example, an identifier of the selected context may then be outputted at the user-interface. At the user-interface 4, the business application may provide suitable controls by means of which the user can selected a context. In response to selecting by the user a certain context, data contained in the user-selected context or information derived from those data may be outputted.

Also, for instance, from a context parameters may be selected which have a value corresponding to the role of a user, or parameters which refer to another parameter having such a value. At the user-interface information about the selected parameter may then be outputted. For example, a context containing a representation of a process may contain parameters 'initiator' and 'participants' and from those a parameter with a value corresponding to the role of a user in an enterprise, e.g. 'engineer' may be selected and information outputted. E.g. the process to which the parameter 'initiator' refers, an identifier of the parameter or other suitable data.

From a context, for example, information about activities to be performed in the business situation represented by the context may be selected and outputted. Thus, a user of the system can be informed about what activities are pending. For instance, from a context parameters of a type 'action' may be selected, and for instance a value of the parameters representing the due date may be outputted at the user-interface. However, other information may also be outputted at the user-interface, such as the type of activity, participants or any other suitable information.

Also, from a context parameters may be selected which contain data representing information about a state of an aspect of the business situation represented by the context. For example, for a context which represents a development of a new project, data may be selected and outputted which informs the user about the budget still available, the status of the development or other suitable information.

At the user-interface, the business application may further provide controls by means of which a context can be modified. For example control can be provided by means of which a user can cause the business application to transfer data from the context to a service 2,3 or invoke at least one of the services associated with the selected context in another suitable manner.

For example a context may e.g. represent an activity-centric model. The context then provides a model of an activity within an enterprise, such as a role, topic, task, or event in a business situation. Depending on the specific type of activity, certain types of actions and resources may be used in a context and can be configured in the context. For example, an activity-centric model may model how in a certain business situation a user is provided with certain information, such as work-lists, work status dashboards, resources, participants, and so on.

The context may, for instance, be a model of collaborative activities in a business. In such case, the context may for instance contain parameters representing those of a collaborative activity such as the parameters: initiator, participants, actions to be performed, and contain data about these parameters. For example, the context may contain a parameter 'initiator' with a value 'manager', or 'delegate', etc.. In the shown example, the value 'manager' may than have the name of an actual person operating in a business situation of the type modelled by the context.

The context may, for example, be an object-centric model. The context then provides a model which is centred around an object in a business situation. For instance, the context may be a model of a business situation centred around a certain job. The context may include object related operations as well as views on all facets on the object. Different job roles may be interested in different facets of the same object type.

The context may also, for example, represent a process-centric model. The context template then provides a model of a workflow in a business situation. Most actions are executed as predefined process steps. Because of the nature of workflow, selected steps may be owned by different users. The context may then model that, e.g., that the process has an initiator, and types of participants, which steps are to be performed by which types of participants, etc. The context may further for example, model the role of the initiator role in an enterprise, the position of the participants within the enterprise, etc.

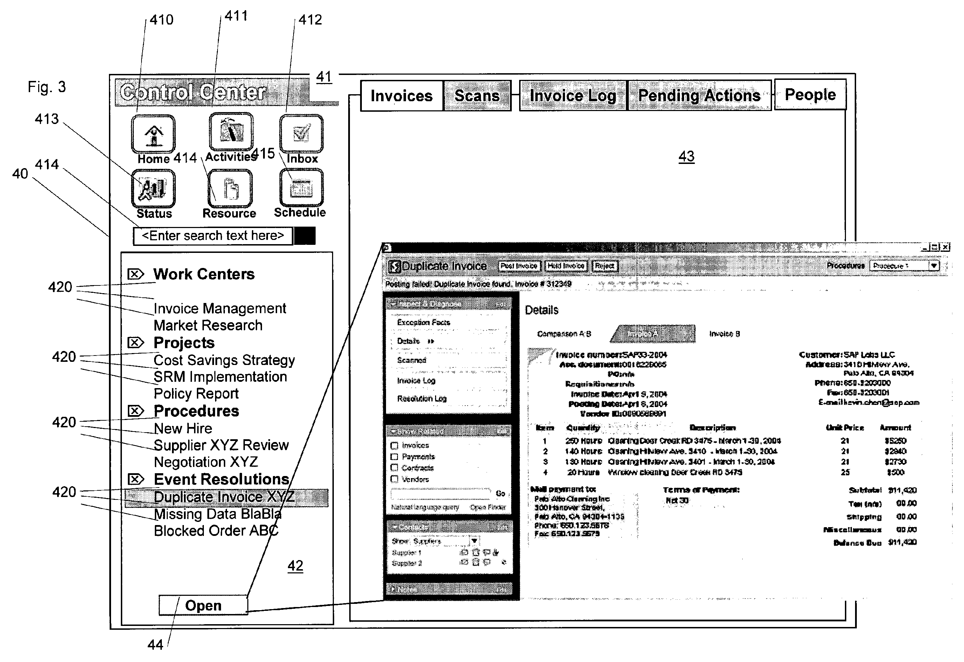

Fig. 3 schematically shows an example of a user-interface 40. The user interface 40 includes a graphical user-interface at which information may be outputted in a for a users perceptible form, for example visually. The shown user-interface 40 includes a control panel 41 and an information panel 43. Via the control panel 41, the information outputted in the information panel 43 is controlled via, e.g., suitable controls 410-415;420. The control panel 41 may be referred to as a control centre. In this example, the control panel 41 is provided with a module control field 42.

By means of module controls 410-415, a user can select a module of the business application. Depending on the selected module, different data is outputted in the module control field 42 and the information panel 43. For example, in case the user selects the module control 410 with the identifier "Home", a news-paper like overview page may be outputted in the information panel 43. In the module control field 42 controls may then be provided by means of which a user can select e.g., recently viewed articles or his favourite news items to be outputted in the information panel.

For instance, in case a user selects the module control 411 with the identifier 'inbox', a module of the business application may be activated which outputs in the information panel 43, for example incoming messages and request and provides in the module control field 42 controls by means of which a user can select a certain type of message to be viewed in the information panel e.g. incoming purchase orders only.

Selecting the module control 413 with the identifier 'status' may for example activate a module of the business application which outputs in the information panel 43 data about the status of pending tasks, key performance indicators of certain object, process or other status information.

In case the module control with the identifier 'Resources' is selected, in the information pane 43, information about resources available via the user-interface may be outputted. This may for example be information about resources such as documents and templates stored on the computer system or services accessible via the user-interface 40. In the module control field 42 controls may then for instance be provided by the business application, by means of which a user can select a certain type of resources, e.g. resources related to travelling.

Furthermore, selecting the module control 415 with the identifier 'schedule' may cause the business application to output in the information panel information suitable for time management of personal and business events and to provide in the module control field 42 controls by means of which, for example, the user can select over which period of time the information in the information panel 43 extends, e.g. a day, a week, a month. However other controls may also be provided.

In the example of fig. 3, a control 411 is provided in the control panel 410 with the identifier 'Activities'. This control is from hereon referred to as the context control 411. In case the context control 411 is selected, a context browser module of the business application is activated. The context browser module may also be referred to as an Activity Browser. The context browser module outputs in the module control field 42 controls by means of which a user may, for example, select a context about which information is outputted in the information panel 43.

In the module control field 42 identifiers 420 of contexts present in the context repository 4 are shown. In this example, the identifiers 420 are ordered by type, e.g. contexts which relate to projects are grouped together, contexts which relate to procedures are grouped together, etc. In this example, the business application has selected contexts relevant to a user, as has been described above.

In fig. 3, for instance, the business application has outputted at the user-interface 40 only identifiers 420 to selected contexts, as well as information common to at least some of the selected context. In this example, the information common to at least some of the selected contexts is an identifier of the context type, e.g. a work centre, a project, a procedure or an event resolution. The identifiers 420 further act as controls by means of which a user can select a context, for example by positioning a pointer of a computer mouse on the identifier and clicking a mouse button. In this example, a context with an identifier 'order management' is selected by the user.

In the information panel 43 data representing information about the 'order management' context is outputted in response to the selection by the user. In this example, in the information panel 43 parameter select controls 430-435 are provided by means of which a user can selected certain parameters of the selected context. For instance, the parameter selection controls 430-435 may allow the user to select parameters of a type: worklist, trigger, status, pending actions, task calendar, achievements, participants, resources, actions, favourites, related information, or assistances

Depending on the selected parameter selection control 430-435, in the information panel 43, which now acts as a context information panel, information about parameters of the selected type is outputted.

For instance, in case the selected type is 'worklist', in the information panel 43 information related to processing piles of work items is outputted.

In case, for example, the selected type is 'trigger', information from parameters in the selected context which relate to work triggers, e.g. triggers which initiated a certain activity is outputted in the information panel 43.

In case, for example, the selected type is 'status', data is extracted from the context which contains information about the status of ongoing work in the business situation represented by the context is outputted in the information panel 43.

In case, for example, the selected type is 'pending actions' data is retrieved from the parameters of the selected context which represents information about pending workflow processes in the business situation represented by the context, and outputted in the information panel 43.

In case, for example, the selected type is 'task calendar': to plan and schedule the work is outputted in the information panel 43.

In case, for example, the selected type is 'achievements', information about modifications to the parameters in the selected context is retrieved, and outputted in the information panel 43. Thereby, the user can obtain information about understand history and progress of the context, and hence the business situation represented by the context.

In case, for example, the selected type is 'participants', from the selected context data containing information about actors in the business situation represented by the selected context, is retrieved and outputted in the information panel 43.

In case, for example, the selected type is 'resources' data from parameters containing pointer or representing artefacts and knowledge resources is outputted in the information panel 43. In case, for example, the selected type is 'actions' in the information panel identifiers of actions, i.e. services associated with a context, applicable to that context is outputted in the information panel 43. In case, for example, the selected type is 'favourites', a personalized subset of frequently used functions and resources within the selected context is outputted in the information panel 43.

In case, for example, the selected type is 'related', information related to the specific business context is outputted in the information panel 43.

In case, for example, the selected type is 'assistance: meta information like help, e-classes, online communities which can be used in a business situation modelled by the context is outputted in the information panel 43.

In fig.3, for example, a parameter select control 431 with identifier 'New POs' is selected and in response thereto, the business application has outputted data of parameters in the selected context which represent new purchase orders in a context parameter data field 436 in the information panel 43. In this example, the data outputted in the context parameter data field 436 is provided with controls, by means of which a user can select additional information to be outputted in detail field 437.

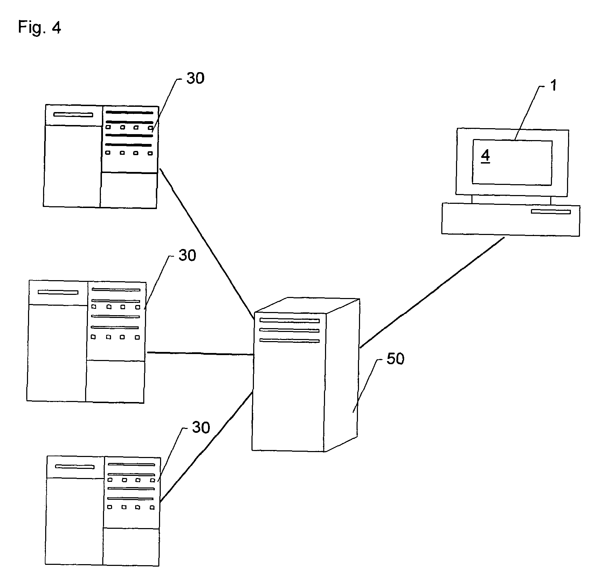

In fig. 4, the user-interface 40 of fig. 3 is shown in a different state. In this state, instead of the context 'order management', a context representing a duplicate invoice situation is selected. As shown in fig. 4, by means of an open control 44, a service associated with the selected context is invoked. In this example, the invoked service activates a separate window 45 by means of which a user can compare different invoices with each other, and hence determine whether or not an invoice is sent twice and how to solve that problem.

Thus, in the example of figs. 3 and 4, the control panel 41, also referred to as the 'Control Centre' provides a user with the business view across all applications and roles within a business situation represented by a certain context. In the information panel 43, which may also be referred to as the 'Work Centre' an overview is provided about the status and resources of one particular activity (workset). As those views reflect generic aspects of a business context, the Control Centre and Work Centre could also be seen as filters into a personal business context:

In this model, the Control Centre is simply the sum across all business contexts. In order to aggregate work contexts, we need a standard way of defining business context, no matter if it associated with a Work Center (e.g. WC1-3) or an Ad-Hoc Activity (e.g. AC1-3), or with an instance of a business object or business process.

Once a standard context has been defined, corresponding UI pattern or applications like the Universal Worklist, the status dashboards, monitoring cockpits, people list, resource collection, service directory, etc. can be build to render various facets of context in a generic way

If the UI is fully separated from the context definition, different UIs can be generated. Workcenter, Activity Center, Event Resolution Dashboard would be just different interaction designs generated from the same underlying data model.

The invention may also be embodied in a business application, including a computer program product with code portions representing at least one instantiated context based on a context template stored in a context repository; and representing at least one input/output interface for transferring data from the instantiated context to an associated service or vice versa, wherein at least one parameter of the instantiated context is connected to the input/output interface, for inputting the aspect to the service or outputting data from the service to the aspect when the business application is running on a computer.

The invention may further be embodied in a computer network. Fig. 4 schematically illustrates an example of an embodiment of a computer network. The computer network includes at least one computer system 1, which may for example be implemented as shown in fig. 1 or any other suitable manner. The computer network further includes a server system 50 in wshich, for example the contexts are stored and the business application may be running. The server system 50 is connected via a suitable data connection to the computer system 1. The server system 50 is further connected to server systems 30 on which services are running. The business application run on the server 50 can transfer data from a parameter of said the context to a service associated with said context or vice versa.

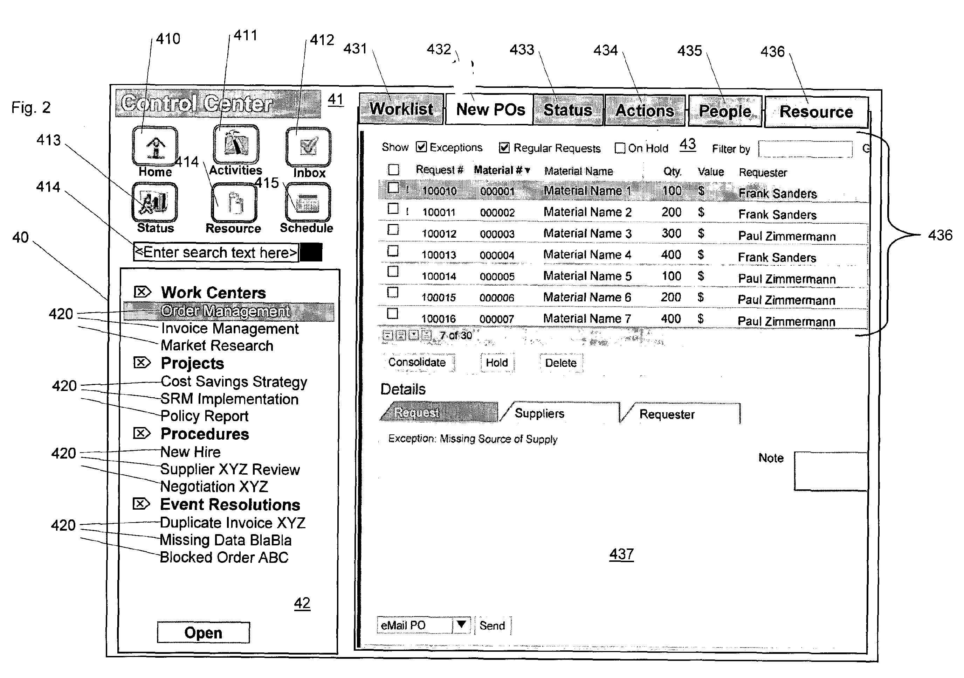

It should be noted that the above-mentioned embodiments illustrate rather than limit the invention, and that those skilled in the art will be able to design alternatives without departing from the scope of the appended claims. For example, the computational aspects described here can be implemented in digital electronic circuitry, or in computer hardware, firmware, software, or in combinations of them. Where appropriate, aspects of these systems and techniques can be implemented in a computer program product tangibly embodied in a machine-readable storage device for execution by a programmable processor, and method steps can be performed by a programmable processor executing a program of instructions to perform functions by operating on input data and generating output. Also, for example, the parameter and/or inputs and/or outputs of the contexts and services described in figs. 2 and 3 may be mapped differently depending on the specific implementation.

A computer (system) includes any type of programmable apparatus such as a desktop computer, a personal digital assistant, a (mobile) telephone or any other suitable type of programmable device. A computer (system) may include one or more of such devices communicatively connected in a suitable manner. To provide for interaction with a user, a computer system can be used having a display device such as a monitor or LCD screen for displaying information to the user and a keyboard and a pointing device such as a mouse or a trackball by which the user can provide input to the computer system. The computer system can be programmed to provide a graphical user interface through which computer programs interact with users.

The mere fact that certain measures are recited in mutually different claims does not indicate that a combination of these measures cannot be used to advantage.

## Claims

1. A computer system, including a user-interface and a processor communicatively connected to the user-interface, which processor is arranged to perform instructions in accordance with a business application stored in a memory connected to the processor, said business application including:
context code portions representing at least one context, which context represents a business situation;
service interface code portions defining at least two interfaces between services and said at least one context, each of said interfaces being arranged for transferring data from a parameter of said context to at least one service associated with said context or vice versa;
user-interface code portions for outputting at the user-interface data representing information about at least one of said contexts.

2. A computer system according to claim 1, wherein said business application further includes data selecting code portions for selecting from said context data depending on a selection criterion and outputting at the user-interface said selected data.

3. A computer system according to claim 2, wherein said business application further includes context selecting code portions, for selecting at least one selected context depending on a selection criterion, and wherein said user-interface code portions are arranged from outputting at the user interface data from the at least one selected context only.

4. A computer system according to claim 2 or 3, wherein said data selecting code portions and/or context selecting code portions are arranged to select the context data and/or context depending on a user of the computer system.

5. A computer system according to claim 4, wherein said data selecting code portions and/or context selecting code portions are arranged to select the context data and/or context depending on a role of said user within an enterprise.

6. A computer system according to any one of the preceding claims, further including control code portions for allowing a user of the computer system to select a context, and code portions for outputting data from the user selected context at the user-interface.

7. A computer system according to any one of the preceding claims, wherein the data from the context includes information about activities to be performed in the business situation represented by the context.

8. A computer system according to any one of the preceding claims, wherein the data from the selected context includes status information about a state of an aspect of the business situation represented by the context.

9. A computer system according to any one of the preceding claims, further including context modifying code portions for providing at the user interface at least one control by means of which a parameter of the selected context can be modified.

10. A computer system according to any one of the preceding claims, further including service code portions for invoking at least one of the services associated with the selected context.

11. A method for running a business application, including:
providing a memory in which at least one context is stored, which context represents a business situation;
providing an interface between the context and at least one service associated with the context, via which interface data may be transferred from a parameter of said the context to an service associated with said context or vice versa;
the method further including outputting at a user-interface data from at least one of said contexts.

12. A computer program product, including code portions for performing a method according to claim 11 when running on a computer.

13. An article of manufacture with a computer usable medium having computer readable instructions embodied therein for providing access to resources available on that computer, the computer readable instructions comprising instructions to cause the computer to perform the steps of a method as claimed in claim 11

14. A computer network including at least one computer system according to any one of claims 1-10 and at least one server system connected to the computer system, for transferring data from a parameter of said the context to an service running on said server system or vice versa, which service is associated with said context.
